# EUROPEAN PATENT APPLICATION

(11) **EP 2 405 394 A2**
(43) Date of publication of application: **11.01.2012**
(21) Application number: 11167216.8
(22) Date of filing: 24.05.2011
(51) Int. Cl.: G06T 3/00

(54) **Image output device and method for outputting image using the same**

(30) Priority: 08.07.2010 KR 20100065924
(71) Applicant: Pantech Co., Ltd., Seoul 121-792 (KR)
(72) Inventor: Kim, Hyunbae, 121-792 Seoul (KR)
(74) Representative: Herzog, Markus

(57) **Abstract**

An image output correcting device includes an output unit to process a first image and to output the processed first image as a second image, an input unit to receive a part of the second image output, a computation unit to compute a depth information of a surface on which the image is outputted by comparing the first image and the second image input to the input unit, and a control unit to generate a third image using the depth information to be outputted. A method for correcting an image output on a surface using depth information includes processing a first image, outputting a second image, computing depth information of a surface to which the second image is outputted by comparing the first image and the second image, and generating a third image using the depth information and outputting the third image.

## Description

### CROSS-REFERENCE TO RELATED APPLICATION

This application claims priority from and the benefit under 35 U.S.C. §119(a) of Korean Patent Application No. 10-2010-0065924, filed on July 8, 2010, which is incorporated by reference for all purposes as if fully set forth herein.

### BACKGROUND

1. FIELD

This disclosure relates to an image output device to correct an image output on a surface using depth information and a method for outputting an image using the same.

2. DISCUSSION OF THE BACKGROUND

As digital television (DTV) technology evolved to provide high-quality images, the demand for conventional direct-view display devices that have been widely used has been decreasing. On the other hand, large-screen projection TVs, PDP TVs, projectors, and the like have emerged as the preferred display devices of DTV. In particular, the projector may be preferred due to its advantage in providing a large screen for the viewer. Therefore, in addition to the use of projectors for business purposes, the use of the projector as the preferred display device for home DTV has been increasing gradually.

### SUMMARY

Exemplary embodiments of the present invention provide an image output device to correct an image output on a surface using depth information. Exemplary embodiments of the present invention also provide a method for correcting an image output on a surface using depth information.

Additional features of the invention will be set forth in the description which follows, and in part will be apparent from the description, or may be learned by practice of the invention.

Exemplary embodiments of the present invention provide an image correction output device including an output unit to process a first image and to output the processed first image as a second image, an input unit to receive a part of the second image, a computation unit to compute a depth information of a surface on which the image is outputted by comparing the first image and the second image, and a control unit to generate a third image using the depth information to be outputted.

Exemplary embodiments of the present invention provide a method for correcting an image output on a surface using depth information including processing a first image, outputting a second image, computing a depth information of a surface to which the second image is outputted by comparing the first image and the second image, and generating a third image using the depth information and outputting the third image.

Exemplary embodiments of the present invention provide an image correction output device including an output unit to process a first image and to output the processed first image as a second image, an input unit to receive a part of the second image, a computation unit to compute a depth information of a surface on which the second image is outputted by comparing the first image and the second image, a determination unit to determine if the second image satisfies an optimization reference by comparing the first image size to the second image size to fmd a size ratio, a memory unit to store a reference frame of the first image wherein the reference frame is an index to detect a change in a pixel of the second image, a sensor unit to generate a sensing signal by sensing a movement of the image output device, and a control unit to generate a third image using the depth information and to control the output unit to output the third image.

It is to be understood that both forgoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a configuration of an image output device according to an exemplary embodiment of the invention.

FIG. 2 is a diagram illustrating a method for correcting an image output on a surface using depth information according to an exemplary embodiment of the invention.

FIG. 3 is a diagram illustrating images for which size ratios are adjusted by an image output device according an exemplary embodiment of the invention.

FIG. 4A, FIG. 4B, and FIG. 4C are diagrams illustrating surface modeling used for depth information computation of an image output device according to an exemplary embodiment of the invention.

FIG. 5 is a diagram illustrating depth information computation using a pixel size of an image output device according to an exemplary embodiment of the invention.

### DETAILED DESCRIPTION OF THE ILLUSTRATED EMBODIMENTS

The invention is described more fully hereinafter with reference to the accompanying drawings, in which exemplary embodiments are shown. This disclosure may, however, be embodied in many different forms and should not be construed as limited to the embodiments set forth herein. Rather, these exemplary embodiments are provided so that this disclosure is thorough and will fully convey the scope of the invention to those skilled in the art. Throughout the drawings and the detailed description, unless otherwise described, the same drawing reference numerals are understood to refer to the same elements, features, and structures. The relative size and depiction of these elements may be exaggerated for clarity, illustration, and convenience.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defmed herein.

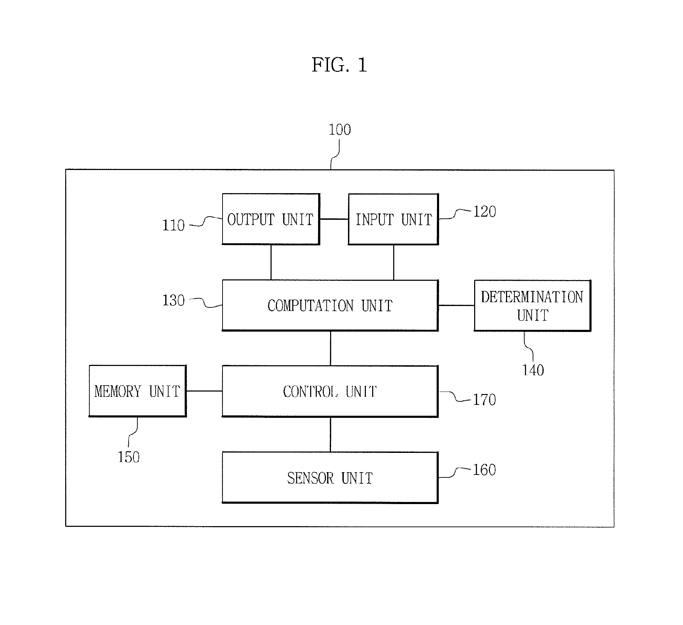

FIG. 1 is a diagram illustrating a configuration of an image output device according to an exemplary embodiment of the invention.

As shown in FIG. 1, an image output device 100 includes an output unit 110, an input unit 120, a computation unit 130, a determination unit 140, a memory unit 150, a sensor unit 160, and a control unit 170. The image output device 100 may be any device that outputs an image on a surface using projection or augmented reality.

The output unit 110 obtains a first image and processes the first image in the image output device 100 to output a second image. In an example, the output unit 110 of the image output device 100 may output the second image by obtaining and processing the first image, and may output a third image using depth information to be outputted. In an example, depth information of a surface on which the second image may be outputted may be computed by comparing the first image and the second image. The first image may be defined as an image prior to being outputted by the output unit 110. The second image may be defined as the outputted image using the first image data provided by the output unit 110. The third image may be defined as the corrected image using depth information.

The input unit 120 receives a part of the second image from the image output unit 110 as input. In an example, the input received by the input unit 120 may be a partial frame of the second image outputted from the output unit 110 or a different device providing the image. In addition, the input unit 120 may include a camera or the like in order to receive the provided input.

The computation unit 130 computes depth information of a surface on which the second image is projected. In an example, the depth information of the surface may be calculated by comparing the first image to the second image . In an example, the depth information may be associated with a distance from the image output device 100 to the surface on which the second image is projected. Alternatively, the depth information may be a relative distance from one surface where part of the second image is projected to another surface where the remaining second image is projected.

Further, the computation unit 130 may designate a part of a surface on which the second image may be projected and use the designated surface to compute the depth information of the group. In an example, there may be multiple parts of the surface(s) that may be designated to provide depth information. Accordingly, the depth information of the multiple measured surface parts may be similar or different from one another.

In an example, methods of computing the depth information by the computation unit 130 may include a surface modeling analysis, a comparative analysis of the size information of each pixel in the first and second images, and the like.

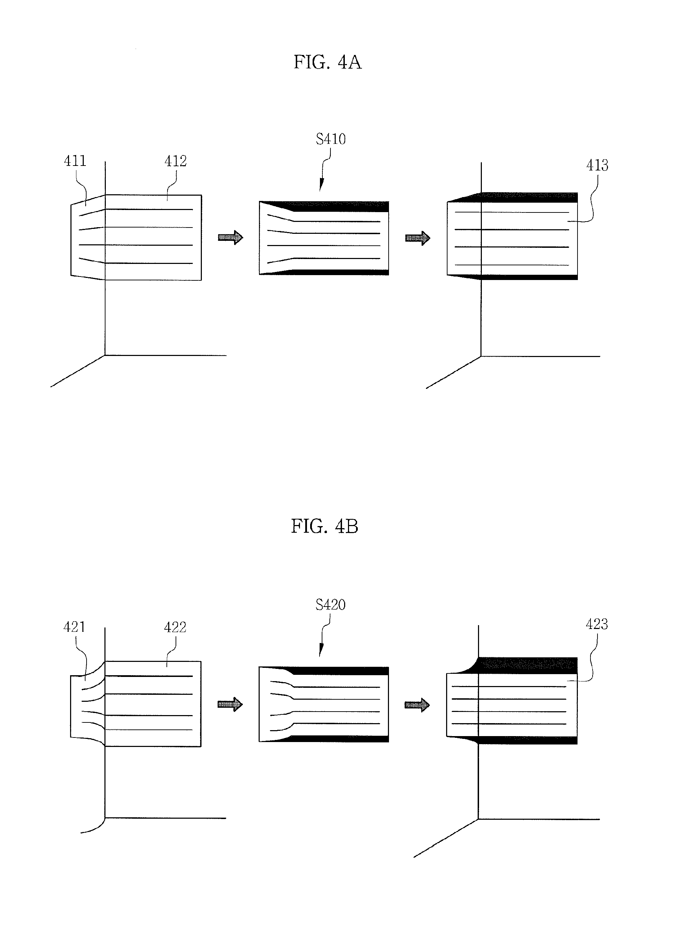

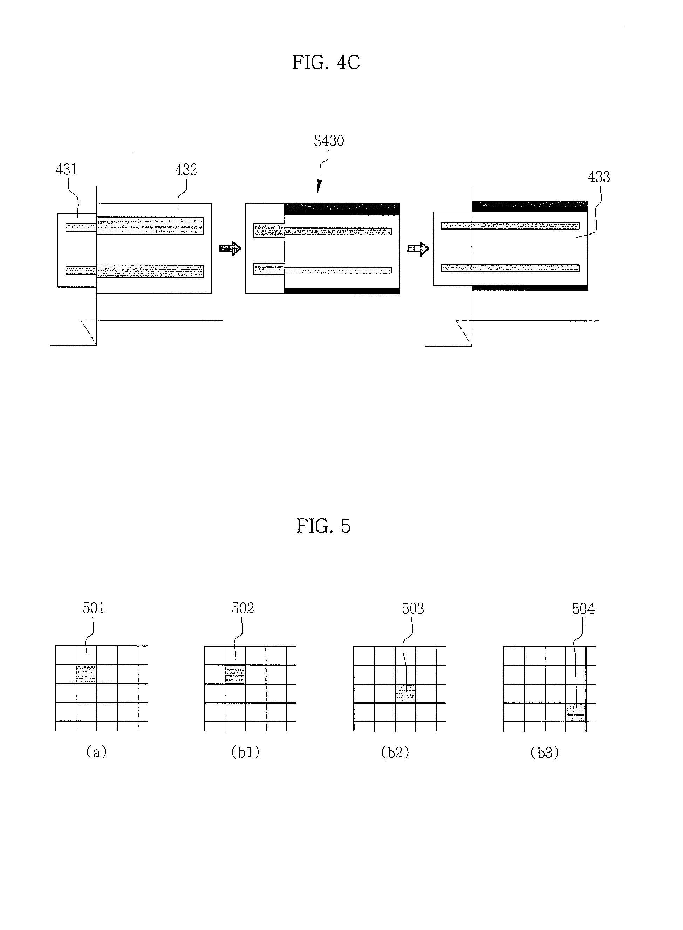

For surface modeling analysis, depth information may be calculated through computer modeling of the surface on which the image is projected by using information of various surfaces. In an example, the information of various surfaces may be stored in a memory unit 150 of the image output device 100, or an external memory, a network server. The type of surface may be recognized by the boundary of the image. Examples of the various surfaces may include a surface on which a part of the second image is linearly reduced or enlarged in size through two adjacent wall surfaces (see FIG. 4A), a surface on which a part of the second image is exponentially reduced or enlarged in size by a circular column and an adjacent wall surface (see FIG. 4B), and a surface on which a part of the second image is reduced or enlarged in size at a site through discontinued wall surfaces (see FIG. 4C).

In an example, by recognizing the types of surface on which the second image is projected on, a first part of the second image projected on one type of surface (e.g. circular column) may be compared to a second part of the second image projected on a different type of surface (e.g. adjacent wall surface) to calculate a relative depth information. Based on the provided depth information, a corrected third image may be generated, which may be a single uninterrupted image (e.g. picture element 423 in FIG. 4B) to be displayed on the different surfaces. Alternatively, first depth information may be calculated by measuring different surfaces, and second depth information may be additionally calculated by comparing the second image with the first image. Accordingly, by utilizing the set of calculated depth information, the corrected third image may be provided. A more detailed discussion of the surface modeling analysis is provided in FIG. 4.

For the comparative analysis of the size information of pixels, depth information computation may be based on the detection of pixel position(s) of a feature point in the first image and the second image. In an example, the feature point may be based on edges, texts, size, or special colors present in the provided images. Based on the detected pixel positions of the feature point, the computation unit 130 may calculate depth information of individual pixels of the image or calculate depth information by designating individual pixels of the image as a group.
A more detailed discussion of the comparative analysis of pixel detection is provided in FIG. 5.

The determination unit 140 determines whether or not the second image satisfies an optimization reference by comparing size ratios, definitions, or the like between the first image and the second image. In an example, the optimization reference may be provided in the image output device 100. More specifically, the determination unit 140 may determine that the second image satisfies the optimization reference if the size of the second image is in a similar reference range to the size of the first image. The determination of the reference range of the first image may be computed by comparing a size ratio of the first image to the second image.

The memory unit 150 stores a reference frame of the first image, which may be used as an index to detect a change in a pixel of the second image. In an example, the reference frame may be an image including information on various letters and various color values. Accordingly, a feature point of each pixel of a frame of the second image can be easily detected and size adjustment and color adjustment can be performed. In an example, the memory unit 150 may additionally store information on various surfaces and other relevant information that may be used in correcting a projected second image.

The sensor unit 160 senses a movement of the image output device 100 and generates a sensing signal. If a position or posture of the image output device 100 is changed while the image output device 100 is outputting an image, the surface on which the image is projected may also be changed. Accordingly, the sensor unit 160 may sense the change in movement so as to generate a newly corrected image of a different surface. In an example, a G-sensor, an accelerometer, or other similar devices may be used for the sensor unit 160.

The control unit 170 generates a third image using the depth information to be outputted. The depth information on a surface on which the second image is outputted may be computed by comparing the first image and the second image by the computation unit 130. More specifically, the control unit 170 may adjust the size ratio of the third image using the depth information computed by the computation unit 130. Similarly, the control unit 170 may correct contrast or color values of the third image by comparing the feature point of each pixel of the first image and the second image. Alternatively, the control unit 170 may correct contrast or color values of the third image by using a digital signal processing (DSP) technique. In addition, by comparing the feature points of the first image data and the second image, the control unit 170 may control to project a third image by enlarging or reducing the image in size, and correcting the contrast, the definition of colors, and the like.

Further, the control unit 170 may determine a correction cycle of the image using the sensing signal from the sensor unit 160. Accordingly, the control unit 170 may generate the third image with a correction cycle based on a frequency of the sensing signal generated by the sensor unit.

In addition, the control unit 170 may generate a third image by using the reference frame of the memory unit 150. More specifically, the control unit 170 may use the information provided by the reference frame to calculate the depth information of the second image, and use the depth information to generate the third image.

The control unit 170 may also generate a third image using the depth information of the individual pixels or designate pixels having similar depth information as a group to correct the grouped pixels as the image.

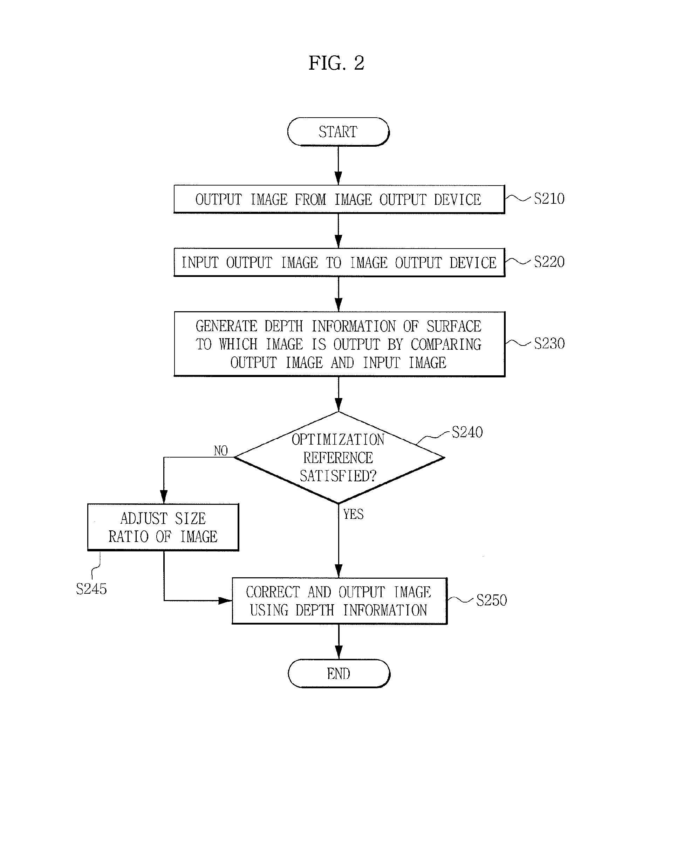

FIG. 2 is a diagram illustrating a method for correcting an image output on a surface using depth information according to an exemplary embodiment of the invention. For convenience, FIG. 2 will be described as if the method were performed by the image display device described above. However, the method is not limited as such.

As shown in FIG. 2, a second image is outputted from an image output device (S210), and a part of the second image is inputted into the image output device for depth information analysis (S220). Depth information of a surface to which the image is outputted is generated by comparing a first image to the second image (S230). In an example, whether or not the second image satisfies the optimization reference may be determined by comparing the first image and the second image (S240). If the second image does not satisfy the optimization reference, a size ratio of the image may be adjusted (S245). If the second image satisfies the optimization reference, the corrected third image may be generated using the depth information to be outputted (S250). In addition, a cycle with which the image is outputted may be determined by sensing a movement of the image output device and using a movement frequency of the image output device.

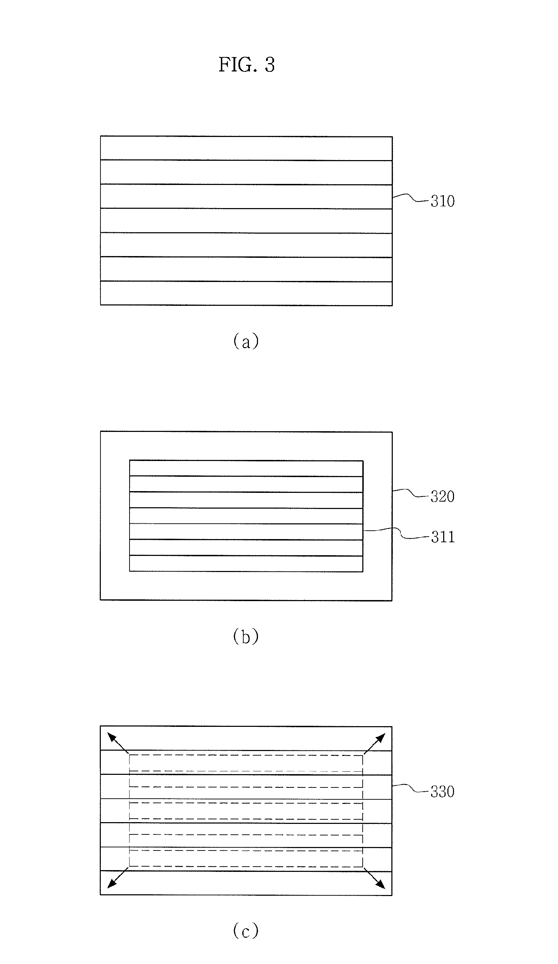

FIG. 3 is a diagram illustrating images for which size ratios are adjusted by an image output device according to an exemplary embodiment of the invention.

FIG. 3 (a) illustrates a first image, which is to be outputted from the image output device, FIG. 3 (b) illustrates a second image outputted from the image output device, and FIG. 3 (c) illustrates a third image, which is generated using a size difference of the first image and the second image. In an example, a change in size of the first image may occur during the output process, and thus a size of the first image 310 may be reduced at a ratio to be displayed 311 as the second image 320. Accordingly, the image output device compares the first image with the second image to fmd the size difference between the two images. Using that information, a corrected third image 330 may be generated. Alternatively, although not shown in the provided figure, the second image 311 may be outputted to be a larger size than the first image 310 to provide for the size difference of the two images.

FIG. 4A, FIG. 4B, and FIG. 4C are diagrams illustrating surface modeling used for depth information computation of an image output device according to an exemplary embodiment of the invention.

FIG. 4A is a diagram illustrating an image projected on the surface of two adjacent walls, FIG. 4B is a diagram illustrating an image projected on a circular column and a wall surface, and FIG. 4C is a diagram illustrating an image projected on discontinued wall surfaces.

As shown in FIG. 4A, if an image is projected on two adjacent wall faces, a first part 411 of the second image may be linearly enlarged in size, and a remaining second part 412 may be maintained in the original state. In this case, the image output device may calculate the depth information of the first part 411 of the second image and the second part 412 of the second image. Using the calculated depth information, a corrected third image may be generated. The third image may linearly reduce the size of the first part 411 through surface modeling, reduce the size of remaining second part 412 at an arbitrary ratio (S410), and be outputted as a uniformly sized third image 413.

As shown in FIG. 4B, if an image is projected on a circular column and a wall face, a first part 421 of the second image may be exponentially enlarged in size, and a remaining second part 422 may be maintained in the original state. In this case, the image output device may calculate the depth information of the first part 421 of the second image and the second part 422 of the second image. Using the calculated depth information, a corrected third image may be generated. The third image may exponentially reduce the size of the first part 421 through surface modeling, reduce the size of the second part 422 at a ratio (S420), and be outputted as a uniformly sized third image 423.

As shown in FIG. 4C, if an image is projected on a discontinued wall surfaces, a part 431 of the second image may be displayed in a smaller size in comparison to a second part 432 of the second image. In an example, if the first part 431 is displayed on a wall surface closer than the wall surface displaying the second part 432, then the first part 431 will be shown as a smaller size in comparison to the second part 432. However, if the first part 431 is displayed on a wall surface farther than the wall surface displaying the second part 432, then the first part 431 will be shown as a larger size in comparison to the second part 432. In the first case, the image output device may calculate the depth information of the first part 431 of the second image and the second part 432 of the second image. Using the calculated depth information, a corrected third image may be generated. The third image may reduce the size of the first part 431 through surface modeling, reduce the size of the second part 432 at a ratio, (S430), and be outputted as a uniformly sized third image 433.

FIG. 5 is a diagram illustrating depth information computation using a pixel size of an image output device according to an exemplary embodiment of the invention.

FIG. 5 (a) illustrates a feature point of a first image, and FIG. 5 (b1), FIG. 5 (b2), and FIG. 5 (b3) are feature points of a second image on different surfaces. The image output device may calculate depth information based on a feature point 501 of the first image and the feature points of a corresponding second image. In a case of the image of (b1), since a position of a feature point 502 is the same as that of (a), the image output device may recognize the position of (b1) as a reference position without a change in depth. In cases of (b2) and (b3), since positions of feature points 503 and 504 are changed, the image output device may recognize that the surfaces corresponding to the positions of (b2) and (b3) may have depth change. Accordingly, the image output device may computes the depth of (b2) and (b3) using the positions at which the feature points are displayed.

Although not shown in the provided figures, the embodiments of the present invention may use a combination of the methods provided above. In an example, surface modeling method may be used as described in FIG. 4, and then a size adjusting method as described in FIG. 3 may be executed to calculate the depth information. In addition, depth information computation may be provided through separately through the pixel size comparison method as described in FIG. 5, or surface modeling method as describe in FIG. 4, or in a combination of the provided methods.

Further, the image output device and the method for outputting an image using the same described above are not limited to the configurations and methods of the embodiments described above, and parts and the entirety of the embodiments may be selectively combined to make various modifications.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.
An image output correcting device includes an output unit to process a first image and to output the processed first image as a second image, an input unit to receive a part of the second image output, a computation unit to compute a depth information of a surface on which the image is outputted by comparing the first image and the second image input to the input unit, and a control unit to generate a third image using the depth information to be outputted. A method for correcting an image output on a surface using depth information includes processing a first image, outputting a second image, computing depth information of a surface to which the second image is outputted by comparing the first image and the second image, and generating a third image using the depth information and outputting the third image.

## Claims

1. An image output correction device, comprising:
an output unit to process a first image and to output the processed first image as a second image;
an input unit to receive a part of the second image;
a computation unit to compute a depth information of a surface on which the second image is outputted by comparing the first image and the second image; and
a control unit to generate a third image using the depth information to be outputted.

2. The image output correction device of claim 1, further comprising a determination unit to determine if the second image satisfies an optimization reference by comparing the first image size to the second image size to find a size ratio,
wherein the control unit adjusts a size of the third image according to the size ratio if the second image does not satisfy the optimization reference.

3. The image output correction device of claim 1 or 2, wherein the computation unit calculates the depth information using surface modeling based on comparison between a first part of the second image and a second part of the second image.

4. The image output correction device of claim 1 or 2, wherein the computation unit calculates the depth information based on a pixel position of a feature point in the first image and the second image.

5. The image output correction device according to any of claims 1 to 4,
wherein the control unit generates the third image in which a size, contrast or a color value is corrected on the basis of the depth information provided by the computation unit.

6. The image output correction device according to claim 5, wherein the size, contrast, or the color value of the third image is corrected using the feature point of each pixel of the output image or using a digital signal processing (DSP) technique.

7. The image output device according to any of claims 1 to 6, further comprising a sensor unit to generate a sensing signal by sensing a movement of the image output device,
wherein the control unit generates the third image with a correction cycle based on a frequency of the sensing signal.

8. The image output device according to any of claims 1 to 7, further comprising a memory unit to store a reference frame of the first image, wherein the reference frame is an index to detect a change in a pixel of the second image.

9. The image output device according to any of claims 1 to 8,
wherein the computation unit designates a part of the surface on which the second image is outputted as a group and computes depth information of the group, and
the control unit generates the third image using the depth information of the group.

10. A method for correcting an image output on a surface using depth information, comprising:
processing a first image;
outputting a second image;
computing a depth information of a surface to which the second image is outputted by comparing the first image and the second image; and
generating a third image using the depth information and outputting the third image.

11. The method according to claim 10, wherein computing the depth information further comprises:
finding a size ratio of the second image by comparing the first image size with the second image size;
comparing the size ratio to an optimization reference; and
adjusting the size of the third image if the second image does not satisfy the optimization reference.

12. The method according to claim 10 or 11, wherein correcting and outputting the corrected third image comprises:
generating a sensing signal if a movement of the image output device is sensed; and
correcting the second image on a correction period depending on a generation frequency of the movement sensing signal.

13. An image output device, comprising:
an output unit to process a first image and to output the processed first image as a second image;
an input unit to receive a part of the second image;
a computation unit to compute a depth information of a surface on which the second image is outputted by comparing the first image and the second image; and
a determination unit to determine if the second image satisfies an optimization reference by comparing the first image size to the second image size to find a size ratio;
a memory unit to store a reference frame of the first image wherein the reference frame is an index to detect a change in a pixel of the second image;
a sensor unit to generate a sensing signal by sensing a movement of the image output device; and
a control unit to generate a third image using the depth information and to control the output unit to output the third image.
